# DEMANDE DE BREVET EUROPEEN

(11) **EP 3 064 420 A1**
(43) Date de publication de la demande: **07.09.2016**
(21) Numéro de dépôt: 16158785.2
(22) Date de dépôt: 04.03.2016
(51) Int. Cl.: B62K 17/00, A63C 17/01

(54) **SYSTÈME PENDULAIRE DE COMMANDE DE DIRECTION D'UN VÉHICULE ET VÉHICULE ÉQUIPÉ D'UN TEL SYSTÈME**

(30) Priorité: 04.03.2015 FR 1500428
(71) Demandeur: Milhau-Blay, Juan Luis, 66160 Le Boulou (FR)
(72) Inventeur: Milhau-Blay, Juan Luis, 66160 Le Boulou (FR)
(74) Mandataire: Rhein, Alain

(57) **Abrégé**

L'invention concerne un système de commande (1) de direction d'un véhicule (2).

Selon l'invention le système de commande (1) comprend une plateforme suspendue (10) dans le vide sur laquelle se tient le pilote du véhicule (2), la plateforme suspendue (10) étant mobile selon une trajectoire oscillatoire transversale par rapport à un bâti (3) du véhicule (2), le déplacement du poids du pilote selon un axe transversal au bâti (3) du véhicule (2) entraînant un déplacement oscillatoire de la plateforme suspendue (10), ce déplacement oscillatoire agissant sur des organes de direction (21) du véhicule (2) au travers de moyens (11) de transmission et de transformation de mouvement.

L'invention concerne également un véhicule (2) comportant le système de commande (1) de direction.

## Description

La présente invention concerne un système pendulaire de commande de direction d'un véhicule destiné à des déplacements sportifs, récréatifs et utilitaires de tout type.

La présente invention concerne également un véhicule terrestre à moteur de propulsion électrique équipé d'un tel système pendulaire de commande de direction d'un véhicule.

Les planches à roulettes, ou skateboards, et leurs multiples déclinaisons, n'offrent pas de possibilité de maintien du pilote sur le plateau du véhicule en cas d'arrêt brutal dudit véhicule. Dans ce genre de situation, le pilote se trouve quasi systématiquement débarqué. Dans le cas où les pieds du pilote sont maintenus sur le plateau par des liens ou des fixations : ces liens ou fixations n'empêchent pas la chute du pilote lors d'un arrêt brutal, mais entraînent le plus souvent le véhicule dans cette chute. Ce problème de sécurité est d'autant plus aigu que le véhicule est motorisé, donc rapide.

La présente invention concerne un nouveau type de véhicule apportant des solutions à ce problème de sécurité, tout en offrant au pilote des sensations de conduite proches de celles ressenties lors de la conduite d'un longboard ou d'une planche à voile terrestre.

En effet, le véhicule décrit dans le présent document se conduit debout, l'axe des épaules du pilote étant sensiblement parallèle à celui du déplacement du véhicule.

Un premier aspect de la présente invention concerne un système de commande de direction d'un véhicule caractérisé en ce qu'il comprend une plateforme suspendue dans le vide sur laquelle se tient le pilote du véhicule, la plateforme suspendue étant mobile selon une trajectoire oscillatoire transversale par rapport à un bâti du véhicule, le déplacement du poids du pilote selon un axe transversal au bâti du véhicule entraînant un déplacement oscillatoire de la plateforme suspendue, ce déplacement oscillatoire agissant sur des organes de direction du véhicule au travers de moyens de transmission et de transformation de mouvement.

Selon une première caractéristique du premier aspect de l'invention, les moyens de transmission et de transformation du mouvement comportent un balancier dont l'extrémité supérieure est reliée au bâti du véhicule par une liaison mécanique rotative, et l'extrémité inférieure est reliée de façon rigide à la plateforme suspendue.

En outre, la liaison mécanique rotative comporte une tige dont une première extrémité est liée de façon rigide à l'extrémité supérieure du balancier, et une seconde extrémité de la tige opposée à la première extrémité comporte un pignon engrenant sur un pignon que comporte l'extrémité supérieure d'un arbre de direction du véhicule.

Selon une particularité de la première caractéristique du premier aspect, le balancier comporte un dispositif de réglage permettant de régler en hauteur la position de la plateforme par rapport au bâti du véhicule.

Selon une deuxième caractéristique du premier aspect, le système de commande de direction d'un véhicule comporte un dispositif de sécurité adapté à être relié au pilote du véhicule.

Plus particulièrement, le dispositif de sécurité comporte un câble disposé sur un enrouleur de câble fixé au balancier par une attache coopérant avec un système de réglage de sa position le long du balancier.

Un deuxième aspect de l'invention concerne un véhicule caractérisé en ce qu'il comporte un système de direction selon le premier aspect de l'invention.

Selon une première caractéristique du deuxième aspect, le bâti du véhicule comporte une pièce de liaison reliée au balancier au niveau de la liaison mécanique rotative, cette pièce de liaison étant prolongée, d'une part, par une potence comportant des organes de direction du véhicule, et d'autre part, par une rampe s'étendant selon un axe parallèle à l'axe longitudinal de la plateforme suspendue, la rampe favorisant le maintien du pilote sur la plateforme suspendue.

En outre, la rampe est prolongée dans une direction opposée à la pièce de liaison par un bras s'étendant depuis la rampe vers des moyens de déplacement selon un plan parallèle à l'axe longitudinal de la plateforme suspendue.

De plus, les moyens de déplacement sont reliés au bras par une zone de jonction, et comportent un essieu s'étendant selon un axe transversal à l'axe longitudinal de la plateforme suspendue, l'essieu étant relié à au moins une roue et comportant au moins une articulation améliorant l'adhérence du véhicule dans les virages.

Plus particulièrement, l'essieu comporte une première partie prolongeant la zone de jonction selon un axe perpendiculaire à l'axe longitudinal de la plateforme suspendue, une deuxième partie formant un coude entre la première partie et une troisième partie de l'essieu qui s'étend selon un axe parallèle à l'axe de la première partie de l'essieu, la première et la troisième partie de l'essieu étant chacune équipée d'une articulation, alors que deux roues disposées de part et d'autre de la troisième partie de l'essieu, assurent le déplacement du véhicule.

Selon une autre caractéristique, les organes de direction comprennent un arbre de direction relié, d'une part, par une extrémité supérieure au balancier au travers des moyens de transmission et de transformation de mouvement, et d'autre part, par une extrémité inférieure à des moyens moteurs entraînant un organe de déplacement du véhicule.

De plus, le véhicule comporte une fourche montée rotative par rapport à la potence selon un axe longitudinal à la direction dans laquelle s'étend la potence, la fourche reliant l'arbre de direction à une roue faisant office d'organe de déplacement, la roue étant équipée de moyens moteurs adaptés à générer le déplacement du véhicule.

Selon une autre caractéristique, le véhicule comporte un module de commande d'inversion du sens de déplacement du véhicule, le module de commande d'inversion étant mobile entre une première position dans laquelle les moyens moteurs tractent le véhicule et une deuxième position dans laquelle les moyens moteurs propulsent le véhicule.

Selon un mode réalisation du deuxième aspect de l'invention, le bâti est formé d'un seul tenant.

D'autres particularités et avantages apparaîtront dans la description détaillée, qui suit, d'un exemple de réalisation, non limitatif, de l'invention illustré par les figures placées en annexe et dans lesquelles :
- la figure 1 est une vue en perspective d'un véhicule comportant un système de commande de direction conforme à un mode de réalisation de l'invention ;
- la figure 2 est une vue en perspective du véhicule similaire de la figure 1 ;
- la figure 3 est une autre vue en perspective du véhicule similaire à la figure 1 ;
- la figure 4 est une vue en perspective d'une pièce de liaison d'un bâti du véhicule de la figure 1, cette pièce de liaison reliant le système de commande de direction au bâti et à des organes de direction du véhicule ;
- la figure 5 est une vue en perspective de dessus d'un balancier reliant la pièce de jonction de la figure 4 par une liaison mécanique rotative ;
- la figure 6 est une vue en perspective de la pièce de liaison de la figure 4 assemblée par une liaison mécanique rotative au balancier de la figure 5 ;
- la figure 7 est une vue en perspective de la liaison mécanique rotative correspondant aux moyens de transmission et de transformation de mouvement du système de commande de direction du véhicule de la figure 1 ; et
- la figure 8 est une vue en perspective de l'avant du véhicule de la figure 1 et des moyens de déplacement de ce véhicule.

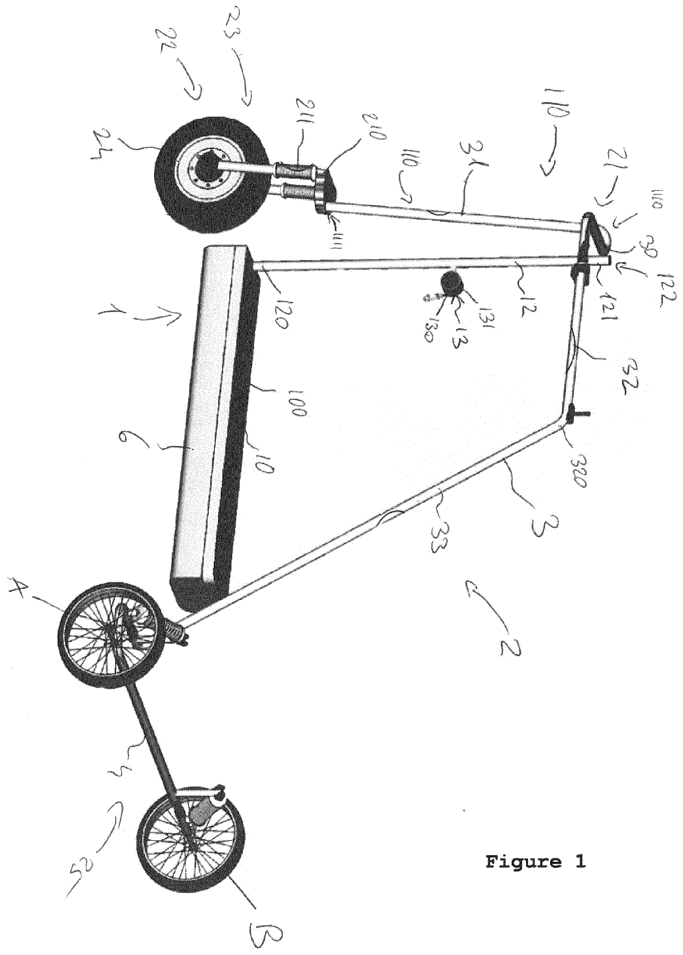

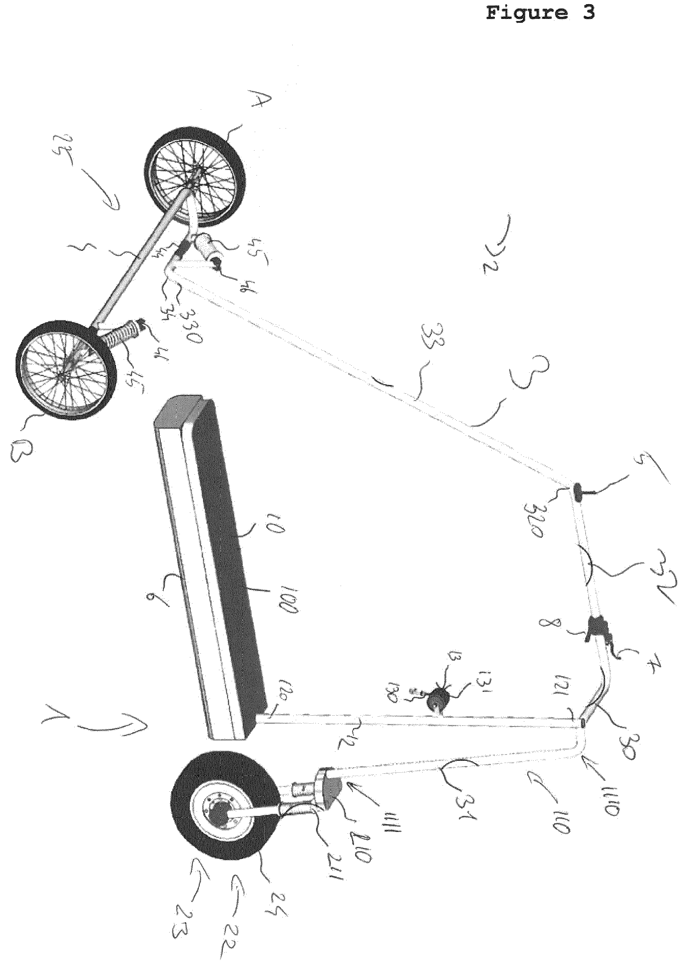

La présente invention illustrée aux figures 1 à 8, est relative à un système de commande 1 de direction et à un véhicule 2 équipé de ce système de commande 1. Le véhicule 2 se conduit debout, l'axe des épaules du pilote étant sensiblement parallèle à celui du déplacement du véhicule 2. Dans cet exemple de réalisation, le pilote conduit avec le pied droit en arrière.

Comme illustré aux figures 1 à 3, le système de commande 1 comporte une plateforme suspendue 10 dans le vide et sur laquelle se tient le pilote. La plateforme suspendue 10 est mobile selon une trajectoire oscillatoire transversale par rapport à un bâti 3 du véhicule 2. Dès lors, le déplacement du poids du pilote selon un axe transversal au bâti 3 du véhicule 2 entraîne un déplacement oscillatoire de la plateforme suspendue 10. Bien entendu, la plateforme suspendue 10 peut être de dimensions et de forme variables suivant le mode de réalisation.

En outre, le déplacement oscillatoire de la plateforme suspendue 10 agit sur des organes de direction 21 du véhicule 2 au travers de moyens 11 de transmission et de transformation de mouvement. A cet effet, les moyens 11 de transmission et transformation de mouvement comportent un balancier 12 dont l'extrémité inférieure 120 est solidarisée au niveau de la partie arrière de la plateforme suspendue 10, alors qu'une extrémité supérieure 121 est reliée au bâti 3 du véhicule 2 par une liaison mécanique rotative 122. Bien entendu, la liaison entre le balancier 12 et le bâti 3 du véhicule 2 peut être réalisée par tout type de liaison mécanique permettant de transmettre et de transformer le mouvement oscillatoire de la plateforme suspendue 10 en un autre mouvement permettant de diriger le véhicule 2 (par exemple un mouvement de rotation, de translation, de balancier etc.). Il est à noter que la plateforme suspendue 10 constitue une nacelle pendulaire 10.

Dans le présent exemple, le balancier 12 est rectiligne et s'élève au-dessus d'une face supérieure 100 de la plateforme suspendue 10. Toutefois, le balancier 12 peut être dimensions et de forme variables suivant le mode de réalisation.

Dans le présent exemple illustré aux figures 1 à 3 et 5, le système de commande 1 de direction comporte un dispositif de sécurité 13 comprenant un câble 130 disposé sur un enrouleur 131 fixé au balancier 12. Il est à noter, que les propriétés mécaniques du câble 130 sont équivalentes à celles d'une ceinture de sécurité automobile notamment en terme de robustesse. Avantageusement, l'enrouleur 131 est fixé au balancier 12 par une attache coopérant avec un système de réglage de sa position le long du balancier. Ainsi, il est possible d'adapter la position de l'enrouleur 131 en fonction de la stature du pilote. L'extrémité libre du câble 130 est destinée à s'accrocher à un équipement de sécurité porté par le pilote, par exemple un baudrier d'escalade. Ce dispositif de sécurité évite au pilote d'être débarqué du véhicule en cas d'arrêt brutal.

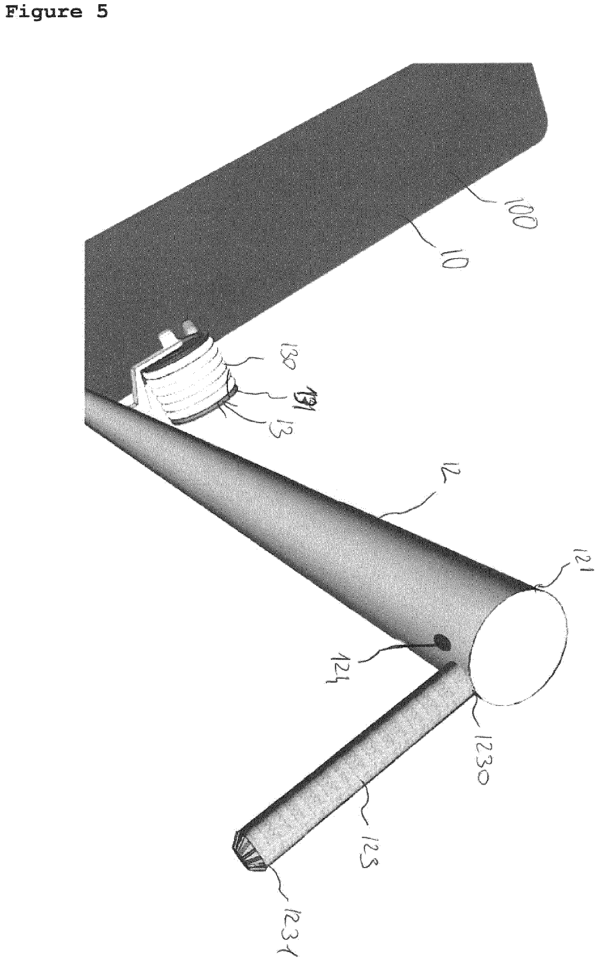

Comme illustré aux figures 5 à 7, le balancier 12 est relié à une pièce de liaison 30 du bâti 3 du véhicule 2 au travers de la liaison mécanique rotative 122. Dans le présent exemple la pièce de liaison 30 forme un coude participant à la cohésion du bâti 3 du véhicule 2 avec la plateforme suspendue 10 et les moyens 11 de transmission et de transformation du mouvement.

Ainsi le balancier 12 transmet le mouvement oscillatoire de la nacelle pendulaire 10, provoqué par le déplacement du poids du pilote, aux organes de direction 21 du véhicule 2. A cet effet, la liaison mécanique rotative 122 est assurée par une tige 123 dont une première extrémité 1230 est liée de façon rigide à l'extrémité supérieure 121 du balancier 12 et une seconde extrémité 1231 de la tige 123 opposée à la première extrémité 1230, qui comporte un pignon de dimensions variables suivant le mode de réalisation. Avantageusement, la seconde extrémité 1231 de la tige 123 est orientée vers l'arrière de la plateforme suspendue 10. Cette tige 123 est destinée à se loger dans un orifice 300 ménagé dans la pièce de liaison 30 du bâti 3 du véhicule 2. Il est à noter que les dimensions et la forme de cette tige 123 sont variables suivant le mode de réalisation.

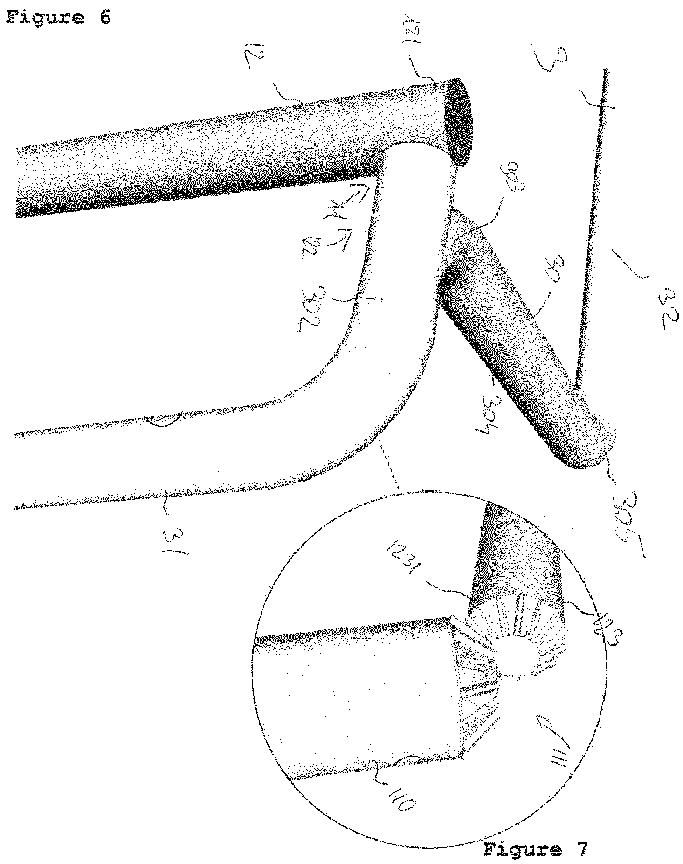

Comme illustré aux figures 6 et 7, la seconde extrémité 1231 de la tige 123 est insérée à l'intérieur de l'orifice 300 de la pièce de liaison 30, le pignon de la seconde extrémité engrenant avec un pignon qui est disposé à l'extrémité supérieure 1100 d'un arbre de direction 110, de manière à former un engrenage 111. Cet engrenage 111 participe à la liaison mécanique rotative 122 et permet de transmettre et de transformer le mouvement oscillatoire de la plateforme suspendue 10, en un mouvement de rotation axiale des organes de direction 21 du véhicule 2 et ainsi d'assurer la direction de ce dernier. L'arbre de direction 110 est disposé à l'intérieur d'une potence 31.

Dans le présent exemple, la potence 31 est rectiligne et s'élève au-dessus du sol à une hauteur variable suivant le mode de réalisation. Avantageusement, l'extrémité supérieure de la potence 31 reliée à la pièce de jonction 30, est incurvée vers l'avant du véhicule 2. Bien entendu, les dimensions de la potence 31 sont variables suivant le mode de réalisation.

Comme illustré aux figures 1 à 3, une extrémité inférieure 1111 de l'arbre de direction 110 est fixée à une tête 210 d'une fourche 211. L'arbre de direction 110 permet de contrôler la rotation de la fourche 211 autour d'un axe parallèle à l'axe de l'arbre de direction 110. En outre, la fourche 211 est reliée à un organe de déplacement 22 et à des moyens moteurs 23 du véhicule 2. Dans le présent exemple, la fourche 211 relie l'arbre de direction 110 à un moteur-roue 24 faisant office d'organe de déplacement 22 et moyens moteurs 23 adaptés à générer le déplacement du véhicule 2. Ainsi, le moteur-roue 24 assure la motricité et la direction du véhicule.

Avantageusement, un ou plusieurs guides sont installés à l'intérieur de la potence 31 et/ou à l'intérieur de la pièce de liaison 30, afin de garantir l'intégrité de la tige 123 et de l'arbre de direction 110. De préférence, ces guides sont installés à l'intérieur de la pièce de liaison 30, afin d'éviter le désengagement de la tige 123 de l'orifice 300 pendant le déplacement du véhicule 2.

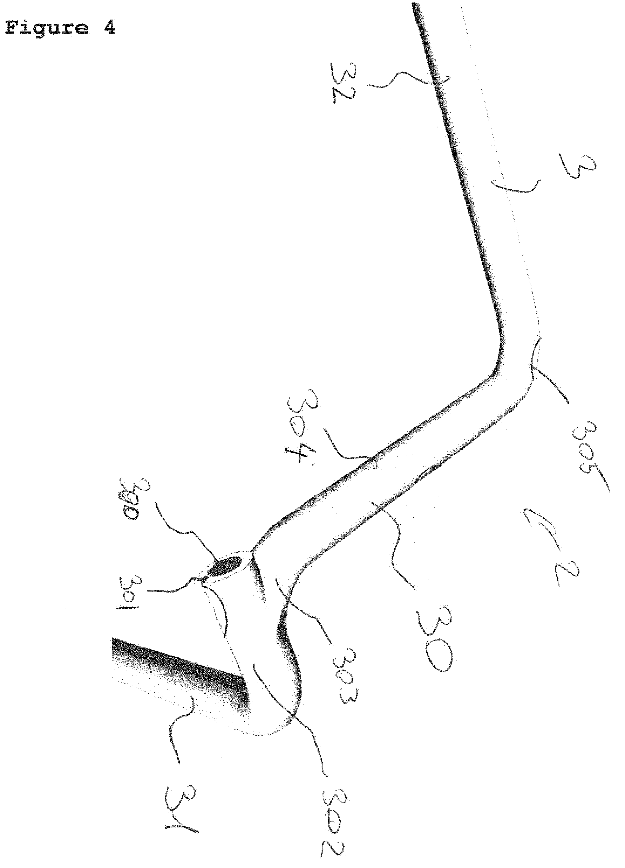

Dans l'exemple illustré aux figures 4 et 5, au niveau de l'extrémité supérieure 121 du balancier 12 et à proximité de la tige 123 est pratiqué un perçage 124 (illustré figure 5). Le perçage 124 permet notamment l'installation de câbles destinés à s'insérer dans le perçage 301 ménagé à proximité de l'orifice 300 de la pièce de liaison 30 (figure 4). Dans le présent exemple, ces câbles permettent de contrôler des moyens moteurs 23 disposés au niveau de la fourche 211. Afin que les câbles passant au travers de la pièce de liaison 30 et de la potence 31 ne gênent pas les moyens 11 de transmission et de transformation de mouvement (la tige 123 et l'arbre de direction 110), les tubes qui constituent la pièce de liaison 30 et la potence 31 comportent un diamètre suffisant de manière à ce que les câbles n'entrent pas en contact avec les moyens 11 de transmission et de transformation de mouvement.

Dans l'exemple illustré aux figures 1 à 3, la pièce de liaison 30 comporte une première partie 302 qui prolonge la potence 31, notamment dans un plan parallèle au sol et dans l'axe longitudinal médian du véhicule 2. Au niveau de la jonction avec la potence 31, la pièce de liaison 30 est délimitée par une extrémité 303. La pièce de liaison 30 comporte une deuxième partie 304 prolongeant la première partie 302 en formant, au niveau de l'extrémité 303, une courbe, notamment dans un plan parallèle au sol. Cette deuxième partie 304 de la pièce de liaison 30 peut être orientée d'un côté ou de l'autre de l'axe longitudinal médian du véhicule 2, suivant que ledit véhicule 2 est conçu pour être conduit avec le pied droit en arrière, ou pour être conduit avec le pied gauche en arrière. La deuxième partie 304 de la pièce de liaison 30 comporte une seconde extrémité 305 qui est située à l'opposé de la première extrémité 303, et est incurvée vers l'avant du véhicule 2, notamment dans un plan parallèle au sol. Bien entendu, cette deuxième partie 304 de la pièce de liaison 30 est de dimensions variables suivant le mode de réalisation.

Dans l'exemple illustré aux figures 1 à 3, 4 et 6, la deuxième extrémité 305 de la deuxième partie 304 de la pièce de liaison 30, est prolongée par une rampe 32 qui est rectiligne. L'axe de la rampe 32 est parallèle à l'axe longitudinal du véhicule 2. En outre, la rampe 32 comporte une extrémité 320 opposée de la pièce de liaison 30, et est incurvée vers le sol. Bien entendu, les dimensions et la forme de la rampe 32 sont variables suivant le mode de réalisation. Avantageusement, le balancier 12 est solidarisé à la plateforme suspendue 10 au niveau de son extrémité inférieure 120 grâce à un dispositif de réglage permettant de régler en hauteur de la position de la plateforme suspendue 10 par rapport au bâti 3 du véhicule 2. Ce dispositif de réglage permet, en fonction de la taille du pilote, d'ajuster la distance entre la nacelle pendulaire 10 et la rampe 32 pour que les épaules du pilote soient à hauteur de la rampe 32. Ainsi, le pilote peut aisément s'accrocher à la rampe 32 afin de manoeuvrer la nacelle pendulaire 10.

Dans l'exemple illustré aux figures 1 à 3, l'extrémité 320 de la rampe 32 est prolongée vers le sol par un bras 33 rectiligne. Le bras 33 s'étend dans une direction opposée à la rampe 32 et comporte une extrémité opposée 330 à la rampe 32 qui est incurvée vers l'avant du véhicule 2 et reliée aux moyens de déplacement 25 du véhicule 2. Bien entendu, les dimensions et la forme du bras 33 sont variables suivant le mode de réalisation.

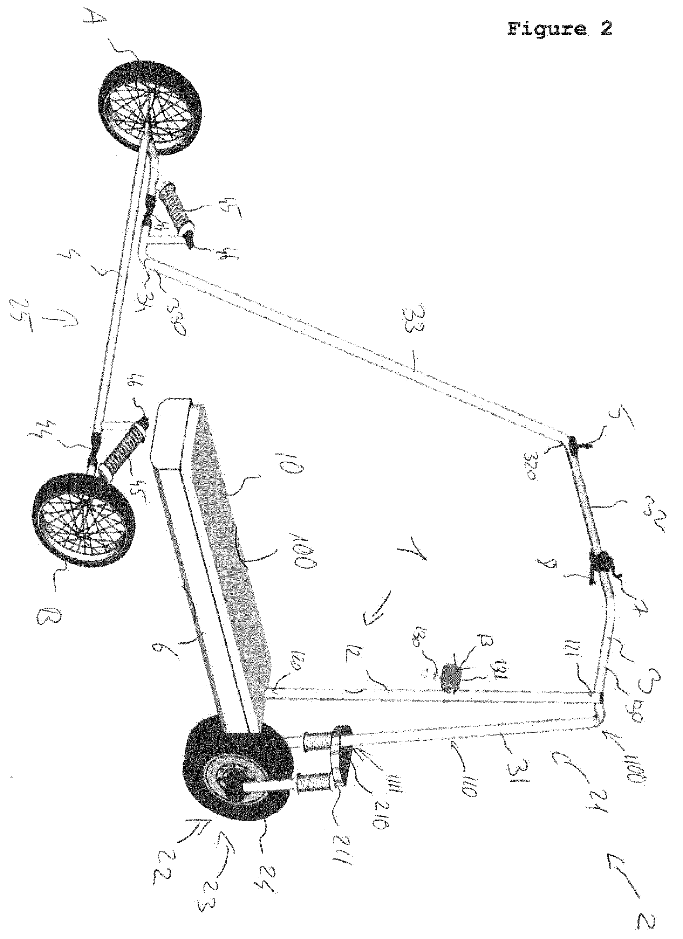

Comme illustré aux figures 2, 3 et 8, l'extrémité 330 du bras 33 est relié aux moyens de déplacement 25 du véhicule 2 par une zone de jonction 34 appelée croisée 34 dans le reste de la description. Cette croisée 34 peut être incurvée vers l'un ou l'autre côté de l'axe longitudinal médian du véhicule 2, suivant que les éléments qu'elle prolonge sont réalisés pour une conduite « pied droit en arrière », ou pour une conduite « pied gauche en arrière ».

Les moyens de déplacement 25 comportent un essieu 4 équipé de deux roues A, B, la croisée 34 reliant l'extrémité 330 du bras 33 avec une première partie 40 de l'essieu 4. La première partie 40 de l'essieu 4 prolonge la croisée 34 dans un axe parallèle à l'axe transversal du véhicule 2. Les dimensions de cette première partie 40 sont variables suivant le mode de réalisation.

La première partie 40 de l'essieu 4 est prolongée par une deuxième partie 41 qui comporte une première courbe 410 vers l'avant du véhicule 2, et une seconde courbe 411 orientée vers l'axe longitudinal médian du véhicule 2. Les dimensions de cette deuxième partie 41 de l'essieu 4 sont variables suivant le mode de réalisation.

La deuxième partie 41 de l'essieu 4 est prolongée, selon un axe parallèle à l'axe transversal du véhicule 2, par une troisième partie 42 de l'essieu 4 qui est rectiligne dans le présent exemple. Les dimensions de cette troisième partie 42 de l'essieu 4 sont variables suivant le mode de réalisation.

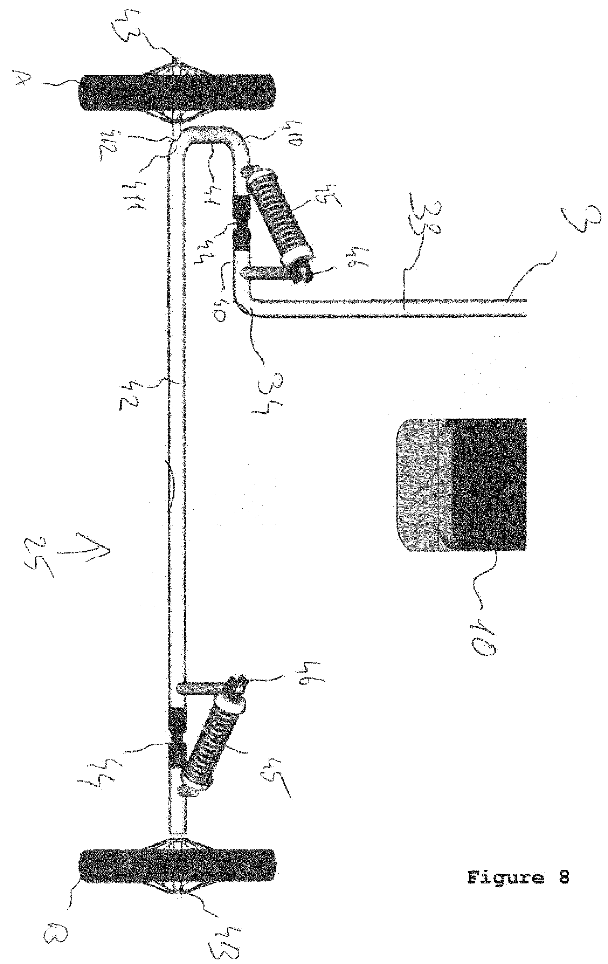

Dans l'exemple illustré à la figure 8, un orifice 412 est pratiqué dans la deuxième partie 41 de l'essieu 4, au point de projection de l'axe longitudinal central de la troisième partie 42 de l'essieu 4, ladite troisième partie 42 étant rectiligne et parallèle à l'axe transversal du véhicule 2. Cet orifice 412 est destiné à recevoir une fusée 43 d'essieu traversant le moyeu de la roue A. Avantageusement, un ou plusieurs guides et un système de fixation sont installés à l'intérieur de l'essieu 4 afin de garantir l'intégrité et la fixation de ladite fusée 43. Avantageusement, à proximité de l'orifice 412 est pratiqué un trou, afin de permettre notamment l'installation de câbles.

Avantageusement, l'extrémité de la troisième partie 42 de l'essieu 4 constitue une pièce pleine au centre de laquelle est pratiqué un orifice destiné à recevoir une fusée 43 d'essieu traversant le moyeu de la roue B. De la même manière que pour la roue A, un ou plusieurs guides et un système de fixation sont installés à l'intérieur de l'essieu 4 afin de garantir l'intégrité et la fixation de ladite fusée 43 de la roue B. À proximité de l'orifice destiné à recevoir cette fusée 43 est pratiqué un trou permettant notamment l'installation de câbles. Bien entendu, les dimensions de la troisième partie 42 de l'essieu sont variables suivant le mode de réalisation, mais telles que les roues A et B peuvent être équidistantes de l'axe longitudinal médian du véhicule 2. Des câbles pouvant être installés à l'intérieur de l'essieu 4, il convient de prévoir au tube qui constitue l'essieu 4 un diamètre suffisant pour que lesdits câbles ne gênent pas l'installation des fusées 43 d'essieu traversant les moyeux des roues A et B.

Afin de compenser l'angle de chasse de la fourche 211 qui entraîne une inclinaison latérale de la potence 31 lors de la rotation de la fourche 211 et donne de la gîte au véhicule 2 dans les virages, l'essieu 4 possède deux articulations 44 permettant une inclinaison cohérente du bâti 3 dans les virages, tout en permettant à la roue avant A, B intérieure au virage de rester sensiblement perpendiculaire au sol. Cette caractéristique permet d'éviter que l'inclinaison de la potence 31 dans les virages ne provoque une torsion du bâti 3.

Avantageusement, une première articulation 44 se situe sur la première partie 40 de l'essieu 4, à une distance variable de la roue A, suivant le mode de réalisation, alors qu'une seconde articulation 44 se situe sur la troisième partie 42 de l'essieu 4, à une distance variable de la roue B, suivant le mode de réalisation. Ces articulations 44 sont équipées de dispositifs d'amortissement 45 et de butées 46 permettant de limiter l'ouverture de chaque articulation 44 à un angle variable suivant le mode de réalisation. Avantageusement, ces caractéristiques permettent d'éviter le renversement du véhicule 2 dans les virages.

Selon une caractéristique additionnelle de l'invention illustrée aux figures 1 à 3, le véhicule 2 comporte un module de commande 5 d'inversion de la polarité du courant électrique. Avantageusement, ce module de commande 5 contrôle le sens de rotation du moteur-roue 24 et permet ainsi d'inverser le sens de déplacement du véhicule 2. A cet effet, le module de commande 5 d'inversion étant mobile entre une première position dans laquelle le moteur-roue 24 tracte le véhicule 2 et une deuxième position dans laquelle le moteur-roue 24 propulse le véhicule 2. En conséquence, outre la conduite du véhicule 2 en marche arrière, il est possible d'envisager plusieurs configurations de conduite du véhicule 2, une première configuration « pied droit en arrière/ propulsion », une deuxième configuration « pied gauche en arrière/traction », une troisième configuration « pied gauche en arrière /propulsion », et une quatrième configuration-« pied droit en arrière/traction ».

En outre, dans l'exemple illustré aux figures 1 à 3, le véhicule 2 est équipé d'une batterie 6 composée d'accumulateurs électriques placée sous la plateforme suspendue 10. Cette batterie 6 est notamment destinée à alimenter le moteur-roue 24 et divers équipements embarqués du véhicule 2.

De plus, un calculateur de bord est fixé sous la plateforme suspendue 10. Ce calculateur communique, de façon filaire ou autre, des indications de pilotage, soit à un terminal fixé au bâti 3, soit à un téléphone intelligent de type « smartphone » du pilote, soit aux lunettes connectées du pilote.

Le véhicule 2 est équipé d'une commande de l'alimentation électrique du moteur-roue 24. Cette commande peut être une gâchette 7 d'accélérateur actionnée avec le pouce, telle celle d'un quad électrique, ou tout autre dispositif de gestion de l'alimentation électrique de moteur, pertinent suivant le mode de réalisation. Dans le présent exemple, la gâchette est disposée au niveau de la rampe 32. De la même manière, le véhicule comporte une poignée 8 de frein coupe-circuit également disposée sur la rampe 32.

De manière générale dans le présent exemple, le véhicule 2 possède un bâti 3 comprenant une pluralité de tubes qui, après jonctions, forment un tube d'un seul tenant. Le bâti 3 du véhicule 2, la plateforme suspendue 10, sont réalisés dans un ou plusieurs matériaux aux propriétés suffisantes pour répondre aux contraintes imposées par la construction et la conduite du véhicule 2.

La nacelle pendulaire 10 décrite dans le présent exemple est adaptée au véhicule 2 de structure tubulaire. Toutefois, il est manifeste que ladite nacelle pendulaire 10 peut être adaptée à d'autres types de véhicule.

En outre, le système de commande de direction 1 permet à la nacelle pendulaire 10 d'entraîner la rotation de la fourche 211, et permet donc un pilotage du véhicule 2 grâce au déplacement du poids du pilote : accroché à la rampe 32, un pilote conduisant avec le pied droit en arrière fait tourner le véhicule 2 à droite en penchant son buste en avant et en projetant la nacelle pendulaire 10 derrière lui avec ses pieds. A l'inverse, il fait tourner le véhicule 2 à gauche en penchant son buste en arrière et en projetant la nacelle pendulaire 10 devant lui avec ses pieds. Pour un pilote conduisant avec le pied gauche en arrière, c'est l'inverse.

Selon un autre exemple de réalisation de l'invention, la nacelle pendulaire 10 et les moyens 11 de transmission et de transformation de mouvement qu'elle utilise, peuvent être réalisés de façon à obtenir une commande de direction inverse à celle décrite ci-dessus. Auquel cas : accroché à la rampe 32, un pilote conduisant avec le pied droit en arrière fait tourner le véhicule 2 à droite en penchant son buste en arrière et en projetant la nacelle pendulaire 10 devant lui avec ses pieds, il fait tourner le véhicule 2 à gauche en penchant son buste en avant et en projetant la nacelle pendulaire 10 derrière lui avec ses pieds. Pour un pilote conduisant avec le pied gauche en arrière, c'est l'inverse.

Des câbles permettant d'assurer des commandes nécessaires à la conduite du véhicule 2 sont situés à l'intérieur de la structure tubulaire du bâti 3.

Pour les modèles réalisés pour une conduite « pied droit en arrière », la distance séparant la croisée 34 de la roue A est plus courte que celle séparant la croisée 34 de la roue B. Inversement pour les modèles réalisés pour une conduite « pied gauche en arrière ».

Dans un mode de réalisation particulier, le bras 33 peut être incurvé vers l'axe longitudinal médian du véhicule 2, outre sa courbure vers le sol. Dans ce mode de réalisation, suivant les angles des courbes du bras 33, la croisée 34 peut être équidistante des roues A et B.

Dans un autre mode de réalisation particulier, le bras 33 peut former, outre sa courbure vers le sol, une courbure amenant son extrémité opposée 330 à la rampe 32 au-delà de l'axe longitudinal médian du véhicule 2. Dans ce mode de réalisation, la distance séparant la croisée 34 de la roue A est, pour les modèles « conduite pied droit en arrière », plus longue que celle séparant la croisée 34 de la roue B, et inversement pour les modèles « conduite pied gauche en arrière ».

En outre, le véhicule 2 décrit ci-dessus est adapté à la nacelle pendulaire 10 décrite ci-dessous. Toutefois, à la lecture de la description ci-dessus, il est manifeste que ledit véhicule 2 peut être équipé d'autres types de commandes de direction. On notera donc que ce véhicule 2 est caractérisé par le fait que son bâti 3 de structure tubulaire est réalisé d'un seul tenant, indépendamment de son système de direction, ou de son nombre de roues, ou de son nombre de roues directrices et de leurs emplacements sur ladite structure, ou de son nombre de flotteurs, ou de skis, ou de patins, ou de chenilles ; ou de sa motorisation, ou de son mode de propulsion ou de la surface sur laquelle un véhicule équipé d'une telle structure est amené à se déplacer.

## Revendications

1. Système de commande (1) de direction d'un véhicule (2) **caractérisé en ce qu'**il comprend une plateforme suspendue (10) dans le vide sur laquelle se tient le pilote du véhicule (2), la plateforme suspendue (10) étant mobile selon une trajectoire oscillatoire transversale par rapport à un bâti (3) du véhicule (2), le déplacement du poids du pilote selon un axe transversal au bâti (3) du véhicule (2) entraînant un déplacement oscillatoire de la plateforme suspendue (10), ce déplacement oscillatoire agissant sur des organes de direction (21) du véhicule (2) au travers de moyens (11) de transmission et de transformation de mouvement.

2. Système de commande (1) de direction d'un véhicule (2) selon la revendication 1, **caractérisé en ce que** les moyens (11) de transmission et de transformation du mouvement comportent un balancier (12) dont l'extrémité supérieure (121) est reliée au bâti (3) du véhicule (2) par une liaison mécanique rotative (122), et l'extrémité inférieure (120) est reliée de façon rigide à la plateforme suspendue (10).

3. Système de commande (1) de direction d'un véhicule (2) selon la revendication 2, **caractérisé en ce que** la liaison mécanique rotative (122) comporte une tige (123) dont une première extrémité (1230) est liée de façon rigide à l'extrémité supérieure (121) du balancier (12), et une seconde extrémité (1231) de la tige (123) opposée à la première extrémité (1230) comporte un pignon engrenant sur un pignon que comporte l'extrémité supérieure (121) d'un arbre de direction (110) du véhicule (2).

4. Système de commande (1) de direction d'un véhicule (2) selon la revendication 2, **caractérisé en ce que** le balancier (12) comporte un dispositif de réglage permettant de régler en hauteur la position de la plateforme suspendue (10) par rapport au bâti (3) du véhicule (2).

5. Système de commande (1) de direction d'un véhicule (2) selon l'une des revendications 1 à 4, **caractérisé en ce qu'**il comporte un dispositif de sécurité (13) adapté à être relié au pilote du véhicule (2).

6. Système de commande (1) de direction d'un véhicule (2) selon la revendication 5 dépendante de la revendication 2, **caractérisé en ce que** le dispositif de sécurité (13) comporte un câble (130) disposé sur un enrouleur (131) de câble fixé au balancier (12) par une attache coopérant avec un système de réglage de sa position le long du balancier (12).

7. Véhicule (2) **caractérisé en ce qu'**il comporte un système de commande (1) de direction selon l'une des revendications 1 à 6.

8. Véhicule (2) selon la revendication 7, **caractérisé en ce que** le bâti (3) du véhicule (2) comporte une pièce de liaison (30) reliée au balancier (12) au niveau de la liaison mécanique rotative (122), cette pièce de liaison (30) étant prolongée, d'une part, par une potence (31) comportant des organes de direction (21) du véhicule (2), et d'autre part, par une rampe (32) s'étendant selon un axe parallèle à l'axe longitudinal de la plateforme suspendue (10), la rampe (32) favorisant le maintien du pilote sur la plateforme suspendue (10).

9. Véhicule (2) selon la revendication 8, **caractérisé en ce que** la rampe (32) est prolongée dans une direction opposée à la pièce de liaison (30) par un bras (33) s'étendant depuis la rampe (32) vers des moyens de déplacement (25) selon un plan parallèle à l'axe longitudinal de la plateforme suspendue (10).

10. Véhicule (2) selon la revendication 9, **caractérisé en ce que** les moyens de déplacement (25) sont reliés au bras (33) par une zone de jonction (34), et comportent un essieu (4) s'étendant selon un axe transversal à l'axe longitudinal de la plateforme suspendue (10), l'essieu (4) étant relié à au moins une roue (A, B) et comportant au moins une articulation (44) améliorant l'adhérence du véhicule (2) dans les virages.

11. Véhicule (2) selon la revendication 10, l'essieu (4) comporte une première partie (40) prolongeant la zone de jonction (34) selon un axe perpendiculaire à l'axe longitudinal de la plateforme suspendue (10), une deuxième partie (41) formant un coude entre la première partie (40) et une troisième partie (42) de l'essieu (4) qui s'étend selon un axe parallèle à l'axe de la première partie (40) de l'essieu (4), la première (40) et la troisième partie (42) de l'essieu (4) étant chacune équipée d'une articulation (44), alors que deux roues (A, B) disposées de part et d'autre de la troisième partie (42) de l'essieu (4), assurent le déplacement du véhicule (2).

12. Véhicule (2) selon la revendication 8, **caractérisé en ce que** les organes de direction (21) comprennent un arbre de direction (110) relié, d'une part, par une extrémité supérieure (1100) au balancier (12) au travers des moyens (11) de transmission et de transformation de mouvement, et d'autre part, par une extrémité inférieure (1101) à des moyens moteurs (23) entrainant un organe de déplacement (22) du véhicule (2).

13. Véhicule (2) selon la revendication 12, **caractérisé en ce qu'**il comprend une fourche (211) montée rotative par rapport à la potence (31) selon un axe longitudinal à la direction dans laquelle s'étend la potence (31), la fourche (211) reliant l'arbre de direction (110) à une roue faisant office d'organe de déplacement (22), la roue étant équipée de moyens moteur (23) adaptés à générer le déplacement du véhicule (2).

14. Véhicule (2) selon l'une des revendications 12 et 13, **caractérisé en ce qu'**il comporte un module de commande (5) d'inversion du sens de déplacement du véhicule (2), le module de commande (5) d'inversion étant mobile entre une première position dans laquelle les moyens moteur (23) tractent le véhicule (2) et une deuxième position dans laquelle les moyens moteur (23) propulsent le véhicule (2).

15. Véhicule (2) selon l'une des revendications 1 à 14, **caractérisé en ce que** le bâti (3) est formé d'un seul tenant.
